# EUROPEAN PATENT SPECIFICATION

(11) **EP 1 481 898 B1**
(45) Date of publication and mention of the grant of the patent: **09.08.2006**
(21) Application number: 03291280.0
(22) Date of filing: 28.05.2003
(51) Int. Cl.: B64G 1/42, H02J 4/00

(54) **Power conditioning architecture for spacecraft**
Leistungsbehandlungschaltung für Raumfahrzeuge
Architecture de conditionnement d'énergie pour engins spatiaux

(43) Date of publication of application: 01.12.2004
(73) Proprietor: ALCATEL, 75008 Paris (FR)
(72) Inventor: Delepaut, Christophe Jean Jacques, 1700 Dilbeek (BE)
(74) Representative: Narmon, Gisèle Marie Thérèse

(56) References cited:
- US-A- 4 659 942
- US-A- 5 798 574
- US-A- 5 874 786

## Description

The present invention relates to a power conditioning architecture for a vehicle, said architecture comprising a plurality of power sources coupled to a plurality of loads by means of an interconnection device.

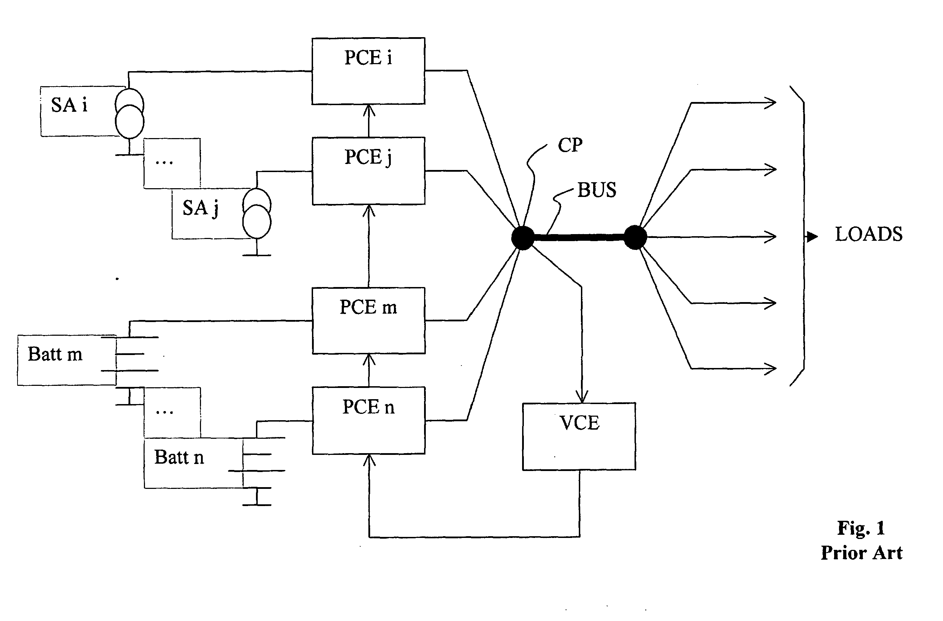

Such a power conditioning architecture wherein several power sources are used is already known in the art, e.g. as shown at Fig. 1 for a spacecraft. Therein, all the energies at the outputs of the power sources (SAᵢ ... SAj; Battm ... Battₙ) converge to the interconnection device or common power bus (BUS) at the end of which they are distributed to the different bus users or loads (LOADS) of the vehicle.

In such a known concentrated power conditioning architecture, the interconnection device is technically sensitive. This is particularly true when relatively high power has to be delivered to the loads. Heavy copper items or bars interconnected with one or several bolts, e.g. at a current concentrating point (CP) located at the input of the common power bus, are used to deal with the high output currents. This known heavy architecture is also relatively expensive and the conductivity thereof, especially at the interconnection points, is subjected to variations on the whole lifetime.

To avoid this problem, the interconnection device preferably has a network architecture with scattered nodes interconnected to each other. The power sources of the plurality of power sources are coupled to the nodes in a distributive manner and the loads of the plurality of loads are also connected to the scattered nodes in a distributive manner.

By scattering the power sources all over the network architecture, the energy transmitted through the interconnection device is also distributed. Since the currents flowing through the interconnection device are reduced, the heavy bolted copper items of the prior art may advantageously be replaced by lighter connection means such as thin wires or paths of printed circuit boards.

By scattering the loads as well as the power sources all over the network architecture, the currents flowing between the nodes are dramatically reduced. This improves the advantage of the present invention by reducing even more the current concentration on the interconnection device or common power bus. The optimal case is obtained when the power sources and the loads are suitably distributed over the architecture. Only relatively low currents then flow between the nodes of the network architecture.

Such a power conditioning architecture wherein the loads are connected to scattered nodes in a distributive manner is already known in the art, e.g. from the *US Patent Application US-A-4* 659 942 *(VOLP JEFFREY A)* of 21 April 1987.

This known document describes a fault-tolerant power distribution system using redundant power sources interconnected to the nodes by means of switching circuits adapted to modify the power distribution in case of problems.

An object of the present invention is to provide a power conditioning architecture of the above known type but wherein the interconnection of the power sources with the nodes is improved.

According to the present invention, this object is achieved due to the fact that said power sources are coupled to the scattered nodes of said network architecture via voltage and power control devices.

Rather than being merely a switching circuit, the main purpose of the voltage and power control device used in the present invention is not only to connect or not a power source to a node but, when connected, to adjust the output voltage of the power source to the voltage on the interconnection device.

Another characterizing embodiment of the present invention is that the voltage and power control device includes a voltage error amplifier adapted to regulate the output voltage to the node.

In this way, this regulation doesn't rely on any external component.

In a preferred embodiment, the present invention is further characterized in that said network architecture is build in at least one power conditioning and distribution unit including said voltage and power control devices and said nodes.

In this way, the whole network architecture with all the nodes is inside a power conditioning and distribution unit to which all the loads are connected. A Power Conditioning and Distribution Unit [PCDU] is known in the art and is for instance disclosed at the Internet site < http://www.esa.int/est/prod/prod0303.htm >.

In another preferred embodiment, the present invention is characterizing in that said nodes are interconnected in a closed loop.

In this with, any open failure on a branch of the network architecture has no negative effect on the operation of the present power conditioning architecture.

Still another characterizing embodiment of the present invention is that said architecture comprises at least three power sources.

This allows an easier distribution of the energy over the power conditioning architecture.

The present invention is further particularly advantageous when said vehicle is a spacecraft.

In a spacecraft, the weight is a critical issue and the voltage may not exceed a predetermined value in order to avoid the well-known Corona effect. The only possibility to distribute high power is then to increase the current. Owing to the distributed architecture of the power sources, the currents may remain within acceptable limits even for relatively high power delivery and the above-mentioned heavy copper items are eliminated.

Yet another characterizing embodiment of the present invention is that said plurality of power sources comprises solar arrays and electrical batteries.

Different types of power sources may be used in the power conditioning architecture, mainly depending on the type of vehicle. In the preferred case of a spacecraft, solar arrays are used in complement of electrical batteries. For future deep space mission, nuclear power converter sources might be resorted to. Other autonomous vehicles, e.g. a submarine, may be concerned as well.

Further characterizing embodiments of the present power conditioning architecture are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a power conditioning architecture used in a spacecraft as already known in the art; and
Fig. 2 represents an improved power conditioning architecture according to the invention.

The power conditioning architecture represented at Fig. 1 is already known in the art and adapted to be used in a vehicle where energy is supplied by different power sources and has to be distributed to different user loads. Although applicable to some vehicles such as submarines or even cars, the shown power conditioning architecture is particularly adapted to be used in a spacecraft. Therein, two kinds of power sources are available:
- several batteries, such as Battm and Battₙ, used when no sunlight is available, and
- about 40 solar arrays, such as SAᵢ and SAⱼ, used to provide the necessary energy in sunlight mode.

The conditioning of the power sources available on board of spacecraft and the subsequent power distribution to users generically occur under a centralized architecture. This means that the current from the power sources converge onto a single current concentrating point CP where a DC voltage regulation is enforced and from where the current distribution to the bus users LOADS is set up. In more detail, the power sources SAᵢ - SAj and Battₘ - Battₙ are connected to one end CP of an interconnection device or common power bus BUS via respective power control electronics PCEᵢ - PCEⱼ and PCEₘ - PCEₙ, e.g. as mentioned on the Internet site < http://www.esa.int/est/prod/prod0305.htm >. The other end of the BUS is connected to different user loads LOADS. The architecture further comprises a voltage control electronic VCE having an input connected to the end CP and controlling the different power control electronics PCEᵢ - PCEⱼ and PCEₘ - PCEₙ.

Although such architecture eases the power bus voltage control, it ensues a concentration of the whole spacecraft current (e.g. 100 A for a 10 KW spacecraft) into a single conductive line BUS. Heavy copper bars requesting bolted interconnections therefore typically constitute such conductive lines. That situation is all the less bearable that the present trend in terms of power level applicable to telecommunication satellites is a steady increase.

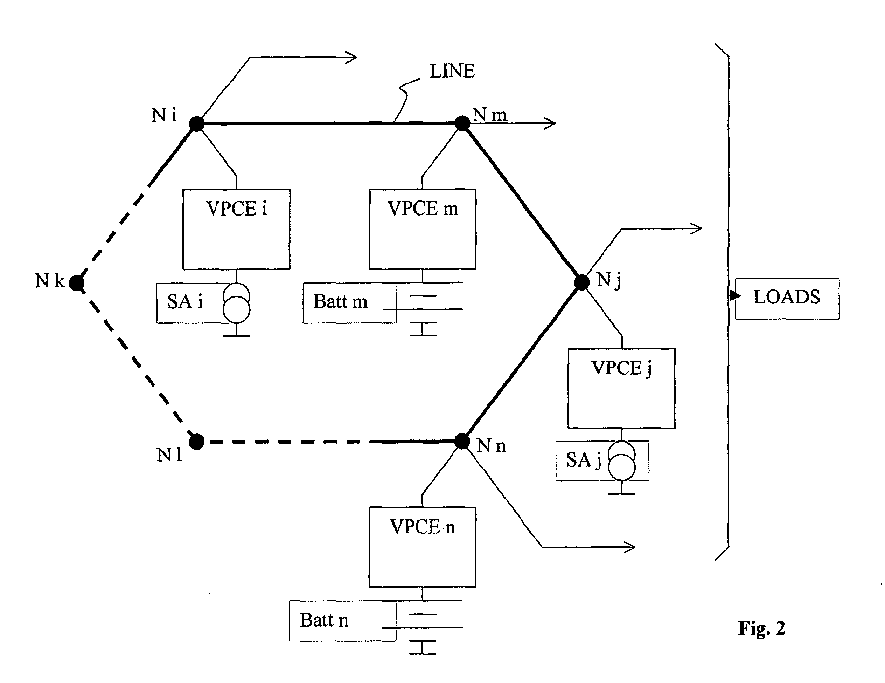

The power conditioning architecture according to the invention and shown at Fig.2 aims at introducing a network architecture LINE as replacement of the known common power bus. In this architecture, the power sources SAᵢ - SAⱼ and Battₘ - Battₙ as well as the bus users LOADS are scattered over the spacecraft. The network LINE is therefore provided with several interconnected nodes Nᵢ, Nj, Nₖ, Nₗ, Nₘ, Nₙ to which the power sources, solar arrays SAᵢ, SAⱼ and batteries Battₘ, Battₙ, are coupled via associated voltage and power control device VPCEᵢ, VPCEⱼ - VPCEₘ, VPCEₙ. The different bus users LOADS are also connected to these nodes Nᵢ - Nⱼ. As a result, the energy is no longer concentrated on the common power bus but is distributed over the different interconnections or branches of the network architecture LINE. Thin wires and even paths of printed circuit boards may thus advantageously replace the heavy copper bar and bolted interconnections of the known power conditioning architecture.

Each voltage and power control device VPCEᵢ, VPCEⱼ - VPCEₘ, VPCEₙ corresponds to a power control electronic PCEᵢ - PCEⱼ and PCEₘ - PCEn, as shown at Fig. 1, and to which is associated an equivalent of the above voltage control electronic VCE. The main purpose of a voltage and power control device VPCEᵢ, VPCEⱼ - VPCEₘ, VPCEₙ is to connect or not the associated power source SAᵢ, SAⱼ - Battₘ, Battₙ, to a node Nᵢ, Nⱼ, Nₘ, Nₙ and, when connected, to adjust the output voltage of the power source to the voltage on the interconnection device. The voltage and power control device includes its own bus voltage error amplifier to regulate the output voltage to the node so that it doesn't rely on any external component.

In a preferred embodiment, the nodes Nᵢ, Nⱼ, Nₖ, Nₗ, Nₘ, Nₙ are interconnected in a closed loop. The architecture is thereby protected against any open circuit single failure, e.g. on a branch of the network.

It is further to be noted that the whole architecture may be build inside a Power Conditioning and Distribution Unit [PCDU], as the one disclosed at the Internet site < http://www.esa.int/est/prod/prod0305.htm >, as a Power Control Unit [PCU] for High Power GEO Satellites, or at < http://www.esa.int/est/prod/prod0303.htm > as a Power Conditioning and Distribution Unit for High Power LEO Satellites. The power conditioning and distribution unit then includes the voltage and power control devices VPCEᵢ, VPCEⱼ - VPCEₘ, VPCEₙ and the nodes Nᵢ, Nⱼ, Nₘ, Nₙ to which they are connected and that are then internal, as well as externally available nodes Nₖ, Nₗ to which the bus users LOADS are connected. The set of externally available nodes may obviously be the same as at least a part of the set of internal nodes.

To allow an efficient distribution of the energy over the power conditioning architecture, the number of power sources is preferably equal to or greater than three.

It is to be noted that a network architecture as described above with scattered power sources and loads is well known at (earth) ground level for electricity production and distribution. However, the present invention makes a spacecraft power conditioning unit compatible with the network notion by means of convenient voltage regulation provisions against possible node voltage reference unbalance.

It is also to be noted that, although the above description as been made in relation with a spacecraft, it is also possible to implement the invention in other kinds of vehicles, such as for instance a submarine where the solar arrays will then be replaced by nuclear power sources.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Power conditioning architecture for a vehicle, said architecture comprising a plurality of power sources (SAᵢ ... SAⱼ; Battₘ ... Battₙ) coupled to a plurality of loads (LOADS) by means of an interconnection device having a network architecture with scattered nodes (Nᵢ ... Nₙ) interconnected to each other,
the power sources of said plurality of power sources (SAᵢ ... SAⱼ; Battₘ ... Battₙ) being coupled to said nodes in a distributive manner, and
the loads of said plurality of loads (LOADS) being also connected to said scattered nodes (Nᵢ ... Nₙ) in a distributive manner,
***characterized in that*** said power sources (SAᵢ ... SAⱼ; Battₘ ... Battₙ) are coupled to the scattered nodes (Nᵢ ... Nₙ) of said network architecture via voltage and power control devices (VPCEᵢ ... VPCEₙ).

2. Power conditioning architecture according to claim 1, ***characterized in that*** each of said voltage and power control device includes a voltage error amplifier adapted to regulate the output voltage to the node.

3. Power conditioning architecture according to claim 1, ***characterized in that*** said network architecture is build into at least one power conditioning and distribution unit (PCDU) including said voltage and power control devices (VPCEᵢ ... VPCEₙ) and said nodes (Nᵢ ... Nₙ).

4. Power conditioning architecture according to claim 1, ***characterized in that*** said nodes (Nᵢ ... Nₙ) are interconnected (LINE) in a closed loop.

5. Power conditioning architecture according to claim 1, ***characterized in that*** said nodes (Nᵢ ... Nₙ) are scattered within said vehicle,

6. Power conditioning architecture according to claim 1, ***characterized in that*** said architecture comprises at least three power sources (SAᵢ ... SAⱼ; Battₘ ... Battₙ).

7. Power conditioning architecture according to claim 1, ***characterized in that*** said vehicle is a spacecraft.

8. Power conditioning architecture according to claim 7, ***characterized in that*** said plurality of power sources comprises solar arrays (SAᵢ ... SAⱼ) and electrical batteries (Battₘ ... Battₙ).

9. Power conditioning architecture according to claim 7, ***characterized in that*** said spacecraft comprises at least three solar arrays (SAᵢ ... SAⱼ).

## Patentansprüche

1. Stromversorgungs-Aufbereitungs-Architektur für ein Fahrzeug, wobei die Architektur eine Vielzahl von Stromquellen (SAᵢ ... SAⱼ; Battₘ ... Battₙ) enthält, die mittels einer Verbindungs-Einrichtung, die eine Netzwerk-Architektur mit verstreuten Knoten (Nᵢ ... Nₙ) hat, mit einer Vielzahl von Lasten (LOADS) gekoppelt sind,
wobei die Stromquellen der Vielzahl von Stromquellen (SAᵢ ... SAⱼ; Battₘ ... Battₙ) mit den Knoten auf verteilte Weise gekoppelt sind, und
die Lasten der Vielzahl von Lasten (LOADS) ebenfalls mit den verstreuten Knoten (Nᵢ ... Nₙ) auf verteilte Weise verbunden sind,
***dadurch gekennzeichnet, dass*** die Stromquellen (SAᵢ ... SAⱼ; Battₘ ... Battₙ) mit den verstreuten Knoten (Nᵢ .. Nₙ) der Netzwerk-Architektur über Spannungs- und Leistungs-Regelungs-Einrichtungen (VPCEᵢ ... VPCEₙ) gekoppelt sind.

2. Stromversorgungs-Aufbereitungs-Architektur gemäß Anspruch 1, ***dadurch gekennzeichnet, dass*** jede der Spannungs-und Leistungs-Regelungs-Einrichtungen einen Spannungs-Fehlerverstärker enthält, der so angepasst ist, dass er die Ausgangsspannung zum Knoten regelt.

3. Stromversorgungs-Aufbereitungs-Architektur gemäß Anspruch 1, **dadurch gekennzeichnet, *dass*** die Netzwerk-Architektur in mindestens eine Stromversorgungs-Aufbereitungs-und Verteilungs-Einheit (PCDU) eingebaut ist, welche die Spannungs- und Leistungs-Regelungs-Einrichtungen (VPCEᵢ ... VPCEₙ) und die Knoten (Nᵢ ... Nₙ) enthält.

4. Stromversorgungs-Aufbereitungs-Architektur gemäß Anspruch 1, ***dadurch* gekennzeichnet, *dass*** die Knoten (Nᵢ ... Nₙ) in einer geschlossenen Schleife (LINE) miteinander verbunden sind.

5. Stromversorgungs-Aufbereitungs-Architektur gemäß Anspruch 1, ***dadurch gekennzeichnet, dass*** die Knoten (Nᵢ ... Nₙ) in dem Fahrzeug verstreut sind.

6. Stromversorgungs-Aufbereitungs-Architektur gemäß Anspruch 1, ***dadurch gekennzeichnet, dass*** die Schaltungsarchitektur mindestens drei Stromquellen (SAᵢ ... SAⱼ; Battₘ ... Battₙ) enthält.

7. Stromversorgungs-Aufbereitungs-Architektur gemäß Anspruch 1, ***dadurch gekennzeichnet, dass*** das Fahrzeug ein Raumfahrzeug ist.

8. Stromversorgungs-Aufbereitungs-Architektur gemäß Anspruch 7, ***dadurch gekennzeichnet, dass*** die Vielzahl der Stromquellen Solarzellen-Anordnungen (SAᵢ ... SAⱼ) und elektrische Batterien (Battₘ ... Battₙ) umfasst.

9. Stromversorgungs-Aufbereitungs-Architektur gemäß Anspruch 7, ***dadurch gekennzeichnet, dass*** das Raumfahrzeug mindestens drei Solarzellen-Anordnungen (SAᵢ ... SAⱼ) enthält.

## Revendications

1. Architecture de conditionnement d'énergie pour un véhicule, ladite architecture comprenant une pluralité de sources d'énergie (SAⱼ ... SAⱼ, Battₘ ... Battₙ) couplées à une pluralité de charges (LOADS) au moyen d'un dispositif d'interconnexion ayant une architecture de réseau avec des noeuds dispersés (Nᵢ ... Nₙ) interconnectés les uns aux autres,
les sources d'énergie de ladite pluralité de sources d'énergie (SAᵢ ... SAⱼ, Battₘ ... Battₙ) étant couplées aux dits noeuds d'une manière distributive, et les charges de ladite pluralité de charges (LOADS) étant également connectées aux dits noeuds dispersés (Nᵢ ... Nₙ) d'une manière distributive,
**caractérisée en ce que** lesdites sources d'énergie (SAᵢ ... SAⱼ, Battₘ ... Battₙ) sont couplées aux noeuds dispersés (Nᵢ ... Nₙ) de ladite architecture de réseau par le biais de dispositifs de contrôle de tension et de puissance (VPCEᵢ ... VPCEₙ).

2. Architecture de conditionnement d'énergie selon la revendication 1, **caractérisée en ce que** chacun desdits dispositifs de contrôle de tension et de puissance comprend un amplificateur d'erreur de tension adapté pour réguler la tension de sortie vers le noeud.

3. Architecture de conditionnement d'énergie selon la revendication 1, **caractérisée en ce que** ladite architecture de réseau est construite dans au moins une unité de distribution et de conditionnement d'énergie (PCDU) comprenant lesdits dispositifs de contrôle de tension et de puissance (VPCEᵢ ... VPCEₙ) et lesdits noeuds (Nᵢ ... Nₙ).

4. Architecture de conditionnement d'énergie selon la revendication 1, **caractérisée en ce que** lesdits noeuds (Nᵢ ... Nₙ) sont interconnectés (LINE) dans une boucle fermée.

5. Architecture de conditionnement d'énergie selon la revendication 1, **caractérisée en ce que** lesdits noeuds (Nᵢ ... Nₙ) sont dispersés à l'intérieur du véhicule.

6. Architecture de conditionnement d'énergie selon la revendication 1, **caractérisée en ce que** ladite architecture comprend au moins trois sources d'énergie (SAᵢ ... SAⱼ, Battₘ... Battₙ).

7. Architecture de conditionnement d'énergie selon la revendication 1, **caractérisée en ce que** ledit véhicule est un engin spatial.

8. Architecture de conditionnement d'énergie selon la revendication 7, **caractérisée en ce que** ladite pluralité de sources d'énergie comprend des panneaux solaires (SAᵢ ... SAⱼ) et des batteries électriques (Battₘ ... Battₙ).

9. Architecture de conditionnement d'énergie selon la revendication 7, **caractérisée en ce que** ledit engin spatial comprend au moins trois panneaux solaires (SAᵢ ... SAⱼ).
